# EUROPEAN PATENT SPECIFICATION

(11) **EP 1 919 975 B1**
(45) Date of publication and mention of the grant of the patent: **17.12.2008**
(21) Application number: 06778366.2
(22) Date of filing: 28.08.2006
(51) Int. Cl.: C08G 63/42, C08G 63/58, C08L 67/06, C08G 63/78

(54) **INTEGRATED PROCESS FOR THE PREPARATION OF A POLYESTER RESIN**
INTEGRIERTES VERFAHREN ZUR HERSTELLUNG EINES POLYESTERHARZES
PROCÉDÉ INTÉGRÉ DE SYNTHÈSE D'UNE RÉSINE POLYESTER

(30) Priority: 29.08.2005 EP 05107893
(43) Date of publication of application: 14.05.2008
(73) Proprietor: Shell Internationale Research Maatschappij B.V., 2596 HR Den Haag (NL)
(72) Inventor: VAN DER HEIDE, Evert, NL-1031 CM Amsterdam (NL)
(74) Representative: Zeestraten, Albertus W. J.
(86) International application number: PCT/EP2006/065709
(87) International publication number: WO 2007/025942

(56) References cited:
- GB-A- 786 102
- GB-A- 956 180
- US-A- 2 822 350
- US-A- 2 909 740
- US-A- 3 254 060
- US-A- 3 374 208
- US-A- 3 538 043
- US-A- 3 624 012
- US-A- 3 683 303
- US-A- 3 701 748
- US-A- 3 975 353
- US-A- 5 892 066

## Description

### FIELD OF THE INVENTION

The present invention provides an integrated process for the preparation of a polyester resin.

Processes for the preparation of polyester resins are well known in the art. In this specification, the term "polyester resin" means the polymers formed by condensation of unsaturated dicarboxylic acids such as maleic acid, and other dicarboxylic acids such as phthalic acid and isophtalic acid, or the respective dicarboxylic acid anhydrides with polyhydric alcohols such as 1,2-propylene diol, diethylene glycol and neopentyl glycol.

GB 956,180 A relates to a process for the manufacture of esters and polyesters, wherein (i) olefinically or cyclo-olefinically unsaturated compounds containing at least 3 carbon atoms (propylene is mentioned as an example thereof) are epoxidised with saturated aliphatic monocarboxylic per-acids containing at least 5 carbon atoms, and (ii) the resulting mixture consisting of the epoxidised compound and the higher saturated aliphatic monocarboxylic acid containing at least 5 carbon atoms is converted into the ester by heating. An accelerator, such as zinc chloride, may be used in step (i). The monocarboxylic acid used in step (ii) is derived from the per-acid used in step (i). It is suggested in GB 956,180 A that before heating of the epoxides formed together with the monocarboxylic acids arising from the per-acids, polycarboxylic acids are added, such as unsaturated or saturated dicarboxylic acids, for manufacturing polyesters. In the Examples of GB 956,180 A such polyesters are not prepared.

In the process of GB 956,180 A, the epoxidised compound is not separated from the monocarboxylic acid derived from the per-acid (which is the oxidant used in step (i)), before carrying out (poly)ester production in step (ii). On the contrary, both said products from said step (i) are reactants in step (ii). Said two steps (i) and (ii) are carried out as a one-pot reaction.

While conventional processes for the manufacture of polyester resins require reaction temperatures in the range of from 180 to 240°C and the continuous removal of water, an improvement in reaction time and energy consumption can be achieved by employing propylene oxide instead of monopropylene glycol, as described in US-A-3374208. Herein, propylene oxide reacts with dicarboxylic acid anhydrides to form alternating copolymers in an exothermic reaction and without release of water.

A disadvantage of the use of propylene oxide resides in the cumbersome handling on an industrial scale, i.e. several thousand of tons per annum. In particular, storage, transport and handling of the environmentally hazardous and toxic propylene oxide are cumbersome and cost intensive. Moreover, propylene oxide is prone to form poly(propylene oxide) during storage, transport and/or handling. The poly(propylene oxide) can be detrimental to the polyester production process due to gel formation, and frequently leads to undesired deviation in the properties of the desired polyester resin, such as molecular weight, molecular weight distribution, viscosity, functionality and resin color, and final application properties; for instance reduced chemical stability of coatings. Due to the above reasons, the use of propylene oxide had been restricted to small-scale production, and niche applications.

The above-identified disadvantages are now overcome by integrating the process for the combined preparation of styrene monomer and propylene oxide with a process for the preparation of unsaturated polyester resins.

Accordingly, the present invention provides for an integrated process for the preparation of a polyester resin, comprising the steps of
(a) reacting a suitable oxidant with propene in the presence of an epoxidation catalyst to form propylene oxide,
(b) separating a propylene oxide fraction, and
(c) reacting the obtained propylene oxide fraction with one or more compounds selected from the group consisting of dicarboxylic acids, dicarboxylic acid anhydrides and polyhydric alcohols to obtain a polyester resin.

The present integrated process permits the manufacture of polyester resins and styrene monomer at an industrial scale, and with significantly reduced environmental risks and impact. The integration with a process to produce propylene oxide not only has the above-described technical advantages, but also results in a significant simplification and hence cost reduction due to the reduced transport and storage requirements for this raw material.

The subject invention also relates to a process for the manufacture of a polyester resin wherein the polyester process is directly linked to the propylene oxide manufacturing process. "Integrated process" within the subject specification has the meaning that the processes for the manufacture of propylene oxide, and of polyester resins are combined into a single process. Herein, the intermediate products are transferred directly to the next reaction stage. "Directly" within the subject specification has the meaning of a direct pipe connection, optionally with intermediate storage facilities, however not involving transport via road car tanker, or any other form of mobile tank. Preferably, a direct connection means that the raw material is produced on the same production site, and transported to the polyester reactor via fixed connections, thereby avoiding further handling of the raw materials.

Suitable oxidants include organic oxides and peroxides.

In step (a), the propene feed is reacted with a suitable oxidant. Suitable oxidants are capable of epoxidation of the alkene to the corresponding alkylene oxide. The oxidants include oxygen, and oxygen-containing gases or mixtures such as air and nitrous oxide. Other suitable oxidants are hydroperoxide compounds, such as aromatic or aliphatic hydroperoxides. The hydroperoxide compounds preferably include hydrogen peroxide, tertiary butyl hydroperoxide, ethyl benzene hydroperoxide, and isopropyl benzene hydroperoxide, of which ethyl benzene hydroperoxide is most preferred. Preferably, the oxidant is not a saturated aliphatic mono-carboxylic per-acid. More preferably, the oxidant is not a per-acid.

Suitable epoxidation catalysts may vary, depending on the substrate and oxidant. Suitable processes for the production of alkylene oxide include those described in US-A-4904807, US-A-5519152 and WO-A-2004/101141. For instance, the preparation of propylene oxide from propylene and an organic hydroperoxide oxidizing agent, such as ethyl benzene hydroperoxide or tertiary butyl hydroperoxide may be performed in the presence of a solubilized molybdenum catalyst, as for instance described in US-A-3351635, or a heterogeneous titania on silica catalyst, as describe in US-A-4367342 and US-A-6504038. Olefin epoxidation using hydrogen peroxide and a titanium silicate zeolite is described in US-A-4833260. Another commercially practiced technology is the direct epoxidation of propylene to propylene oxide by reaction with oxygen over a silver catalyst. Further, the direct epoxidation of olefins with oxygen and hydrogen in the presence of a catalyst has for example been described in JP-A-4-352771, US-A-5859265, US-A-6008388, US-A-6281369, JP-A-4-352771, US-A-6498259, US-A-6441204, and US-A-6307073, using heterogeneous catalysts that incorporate a noble metal such as palladium or gold and a carrier such as titania or zeolites.

A particularly preferred process for the preparation of propylene oxide is an integrated styrene monomer/propylene oxide process, as for instance described in US-A-6504038. This process is particularly advantageous if the polyester resin to be prepared is an unsaturated polyester resin as described in Kirk-Othmer, Encyclopedia of Chemical Technology, Vol. 18, p.575 (1982), Koon-Ling Ring et al., "Unsaturated Polyester Resins", Chemical Economics Handbook, 580.1200, April 1999 and "Polyesters, Unsaturated", Encyclopedia of Polymer Science and Engineering; 3d ed., Vol. 12. p. 256. Unsaturated polyester resins are polyester resins as defined above, wherein at least part of the dicarboxylic acids, dicarboxylic acid anhydrides or polyhydric alcohols comprises an unsaturation capable of radical copolymerization with styrene monomer.

In step (a) of this preferred process for the preparation of an unsaturated polyester resin, ethylbenzene hydroperoxide is reacted with propene in the presence of an epoxidation catalyst to form propylene oxide and 1-phenyl ethanol. In step (c), the propylene oxide fraction obtained in step (b) is preferably reacted with one or more compounds selected from the group consisting of dicarboxylic acids, dicarboxylic acid anhydrides and polyhydric alcohols to obtain an unsaturated polyester resin, wherein at least part of the dicarboxylic acids, dicarboxylic acid anhydrides or polyhydric alcohols comprises an unsaturation capable of radical copolymerization with styrene monomer. The preferred process using ethylbenzene hydroperoxide as the oxidant, further comprises a step (d), wherein at least part of the 1-phenyl ethanol obtained is dehydrated into styrene in the presence of a suitable dehydration catalyst.

The obtained unsaturated polyester resin may then preferably be blended with the styrene monomer, and optionally with other resin types such as thermoplastic resins, epoxy resins or polyurethanes as required by the final application.

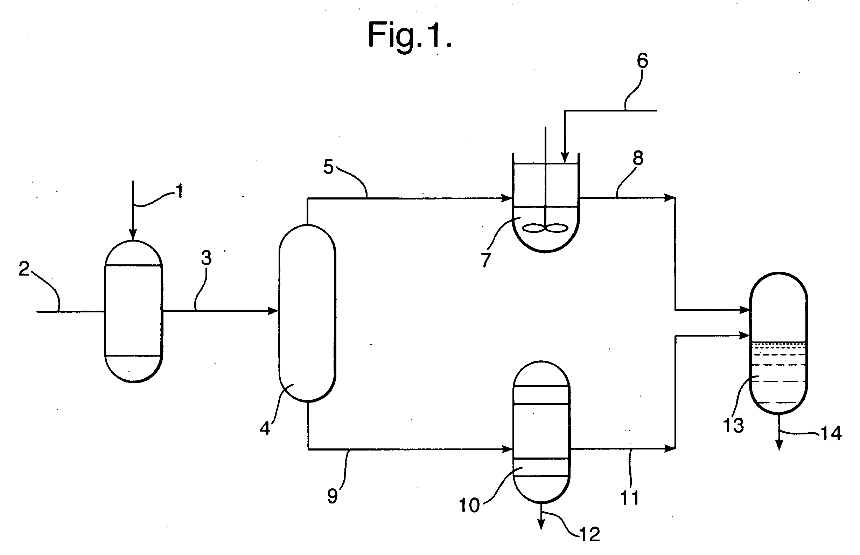

Figure 1 illustrates the preferred embodiment of the subject process: A feed stream (1) comprising ethylbenzene hydroperoxide and propene is transferred into a reactor unit (2). In the reactor unit (2) in process step (a), the ethylbenzene hydroperoxide is contacted with propene in the presence of an epoxidation catalyst to form propylene oxide and 1-phenyl ethanol. The obtained mixture (3) is then transferred to a separation unit (4), wherein it is separated into a crude propylene oxide fraction (5) and a fraction comprising the 1-phenyl ethanol (9). The crude propylene oxide fraction (5) is transferred into a reactor unit (7) for the preparation of an unsaturated polyester resin (8). In this reactor unit (7), the propylene oxide is contacted with other raw materials (6), comprising one or more compounds selected from the group consisting of dicarboxylic acids, dicarboxylic acid anhydrides and polyhydric alcohols to obtain the unsaturated polyester resin (8). The reactor unit preferably comprises means to agitate the reaction mixture, such as a stirrer and/or baffles. It further preferably comprise means to remove water, means that can provide heating and/or cooling of the reaction mixture.

At least part of the dicarboxylic acids, dicarboxylic acid anhydrides or polyhydric alcohols (6) comprises an unsaturation capable of radical copolymerization with the styrene monomer. The 1-phenyl ethanol (9) is transferred to a reactor unit (10), wherein it is at least in part dehydrated into styrene monomer (11) in the presence of a suitable dehydration catalyst, and separated from a stream (12) comprising water. The styrene monomer (11) and the unsaturated polyester resin (8) are transferred to a mixing unit (13), forming an unsaturated polyester composition (14).

In step (a) of the subject process, an oxidant, preferably ethylbenzene hydroperoxide is reacted with propene in the presence of an epoxidation catalyst to form propylene oxide.

Where the oxidant is ethylbenzene hydroperoxide, the subject process preferably comprises a further step (d), wherein 1-phenyl ethanol obtained in step (a) is dehydrated at least partly into styrene in the presence of a suitable dehydration catalyst.

Ethylbenzene hydroperoxide is available from conventional processes for instance processes-involving reacting ethylbenzene with oxygen or air to form ethylbenzene hydroperoxide. Suitable processes for the preparation of styrene monomer and propylene oxide from ethylbenzene propene and have been described for instance in US-A-6504038, or in EP-A-345856. Ethylbenzene hydroperoxide usually contains by-products such as methylphenylketone, acids such as benzoic acid and glycolic acid, 2-phenylethanol and dimers such as bis (α,α-phenyl ethyl)ether. Furthermore, the reaction in step (a) is known to produce oxygen-containing by-products such as aldehydes, ketones, alcohols, ethers, acids and esters, such as acetone, acetic aldehyde, propionic aldehyde, methyl formate, and the corresponding carbon acids and esters.

In step (b), the propylene oxide is separated. The separation of the propylene oxide is usually done by first removing unreacted alkene from the reaction mixture, and subsequently separating a "crude" propylene oxide fraction from the remaining mixture by at least one distillation treatment. The first distillation of the reaction mixture gives an overhead fraction containing unreacted alkene and some low boiling impurities, and is preferably carried out at a pressure of from 1 to 20 x 10⁵ N/m² (bar), and at a temperature range of from 10 °C to 250 °C. Then the propylene oxide is removed together with other, higher boiling contaminants as an overhead product from the reaction mixture obtained in step (a). This second distillation is usually carried out at a pressure of from 0.1 to 20 x 10⁵ N/m², and at a temperature range of from 0 °C to 250 °C, and preferably at a pressure in the range of from 0.1 to 1 x 10⁵ N/m², and at a temperature in the range of from 10 °C to 200 °C.

The thus obtained crude propylene oxide is generally termed "wet crude" propylene oxide due to the by-products and water present therein. This wet crude propylene oxide preferably contains from 50 to 5000 ppmw (parts per million by weight) of water, more preferably from 100 to 4800 ppmw of water. Yet more preferably, this wet crude propylene oxide contains at most 4500 ppmw, again more preferably at most 4000 ppmw, yet more preferably at most 3500 ppmw, and most preferably at most 3000 ppmw of water.

The "wet crude" propylene oxide is then usually purified further to remove excess water. This is usually done by removing part of the water still present in the wet crude propylene oxide in a distillation treatment as the overhead product from a "wet" crude propylene oxide fraction, as for instance described in US-A-3607669. Preferably, one or more entrailer components are employed in this distillation treatment. Entrailer components are compounds that are added to the material to be separated, and which facilitate a distillation, for instance by changing of the equilibrium of an azeotropic mixture, and hence simplify the separation and thus the process. Accordingly, the use of suitable entrailer components reduces the amount of components other than propylene oxide in the bottom product of the distillation unit, in particular water, without the need for a distillation column having a higher separation capacity. Preferred entrailer components are aliphatic hydrocarbons having 4 or 5 carbon atoms. This distillation treatment can be carried out at a pressure of from 1 to 20 x 10⁵ N/m² (1 to 20 bar), and at a temperature range of from 0 °C to 200 °C. Preferably, the distillation treatment is carried out at a pressure in the range of from 5 to 10 x 10⁵ N/m², and at a temperature in the range of from 10 °C to 150 °C. The propylene oxide fraction obtained in this distillation treatment, also known as "dry crude" propylene oxide, preferably contains from 0 to 150 ppmw of water, more preferably less than 120 ppmw of water, again more preferably less than 100 ppmw of water, even more preferably less than 80 ppmw, and most preferably less than 50 ppmw of water. Again more preferably, the dry crude propylene oxide contains at least 5, more preferably 10 ppmw of water, since a complete separation of water would be costly and cumbersome.

While the separation of the unreacted alkenes and at least part of the water can be effected without difficulty, the separation of aldehydes and acids from the propylene oxide is particularly difficult. As set out above, it was found that the impurities and the remaining water react into the polyester resin. For commercial use, dry crude propylene oxide needs to be subjected to a further purification. The additional purification requires complex equipment, and consumes large amounts of energy as well as involving the undesired handling of propylene oxide, as outlined in EP-A-0755716, US-A-3578568, and WO-A-02070497. Moreover, it is known that increasing amounts of poly(propylene)oxide is generated in the purification treatments.

It has now been found that the by-products, i.e. mainly aldehydes, carboxylic acids and ketones, and water present in the wet crude and/or dry crude propylene oxide can be accommodated in the unsaturated polyester resin without or with only minor modification of the polyester formulation, since during the polyester formation the by-products become incorporated into the polyester resin, or are removed during the process. Accordingly, the subject process preferably employs crude propylene oxide, such as "wet crude" or "dry crude" propylene oxide. This permits to significantly reduce the costs for the preparation of the propylene oxide, and hence the costs for the manufacture of the unsaturated polyester resin are reduced as well.

Under the conditions for polyester manufacture, the aldehyde or ketone will react into the polyester resin with any nucleophilic group, such as alcohols under formation of an acetal or ketal structure. These polyester resins obtainable by the subject process, preferably contain from 0.02 to 5% by weight of units derived from propionic aldehyde.

Preferably, wet crude propylene oxide is directly employed in step (c), due to its good availability. Water present in this crude propylene oxide advantageously may act as a two-functional initiator compound, or reacts with any anhydride present in the reaction mixture to a dicarboxylic acid. Accordingly, the present invention also preferably pertains to a process, wherein the crude alkylene oxide comprises from 50 to 5000 ppmw of water, based on total composition.

Alternatively, for water critical polyester formulations or critical formulations, dry crude propylene oxide is employed. Changes to critical formulations can be made simply by taking the functionality of the by-products present in the propylene oxide into account.

Preferably, the crude propylene oxide fraction used in step (c) comprises on total composition from 95% by weight to 99.95% by weight of propylene oxide. Preferably, the crude propylene oxide fraction preferably comprises at least 96% by weight of propylene oxide, more preferably more than 96% by weight, even more preferably at least 97% by weight, more preferably more than 97% by weight, even more preferably at least 99% by weight, again more preferably more than 99% by weight, and most preferably at least 99.50% by weight of propylene oxide. Preferably, the crude propylene oxide fraction comprises at most 99.93% by weight of propylene oxide, more preferably less than 99.90% by weight, again more preferably at most 99.85% by weight, yet more preferably less than 99.83% by weight, again more preferably at most 99.80% by weight, more preferably less than 99.80% by weight, yet more preferably at most 99.79% by weight, and most preferably at most 99.78% by weight of propylene oxide, the remainder being compounds originating from the epoxidation reaction of ethyl benzene to ethyl benzene hydroperoxide, or reaction products of these compounds during step (a).

The crude propylene oxide fraction may also comprise a small quantity of poly(propylene oxide) having a weight average molecular weight of more than 2000, however preferably less than 50 ppmw. Unless stated otherwise, the molecular weights mentioned are weight average molecular weights, and the functionality is the nominal functionality (Fn). The crude propylene oxide fraction more preferably contains at most 30 ppmw of poly(propylene oxide) having a weight average molecular weight of more than 2000, yet more preferably at most 20 ppmw particularly more preferably at most 15 ppmw, again more preferably at most 12 ppmw, yet more preferably at most 5 ppmw, and most preferably contains at most 3 ppmw of poly(propylene oxide) having a weight average molecular weight of more than 2000.

In step (c), the separated propylene oxide fraction obtained in step (b) is reacted with other raw materials to form the polyester resin. This involves an initial reaction between a carboxylic acid functional compound and the propylene oxide, optionally in the presence of a catalyst to form a hydroxyalkyl ester reaction product, which then can react further. Preferably, propylene oxide and one or more dicarboxylic acid anhydrides are reacted under the initiation by an initiator compound having one or more active hydrogen atoms. Initiator compounds according to the subject process are compounds having at least 1, preferably from 2 to 6 active hydrogen atoms. The active hydrogen atoms are typically present in the form of hydroxyl groups, but may also be present in the form of e.g. amine groups, thiol groups or carboxylic groups. Suitable initiator compounds include water, alcohols containing at least one active hydrogen atom per molecule available for reaction with either the anhydride, or the propylene oxide. Suitable aliphatic initiator compounds include polyhydric alcohols containing of from 2 to 6 hydroxyl groups per molecule. Examples of such initiator compounds are water, diethylene glycol, dipropylene glycol, glycerol, di- and polyglycerols, pentaerythritol, trimethylolpropane, triethanolamine, sorbitol, mannitol, 2,2'-bis(4-hydroxylphenyl)propane (bisphenol A), 2,2'-bis(4-hydroxylphenyl)butane (bisphenol B) and 2,2'-bis(4-hydroxylphenyl)methane (bisphenol F). Preferred are aliphatic alcohols containing at least 1, more preferably at least 2 active hydrogen groups in the form of hydroxyl groups. Preferably, the aliphatic alcohols contain at most 5, more preferably at most 4, and most preferably at most 3 hydroxyl groups per molecule.

The ring-opening reaction between initiator compound and the anhydride, or the propylene oxide leads to a polymerization of alternating units of propylene glycol and dicarboxylic acid, bonded by ester linkages, although ether linkages are possible, and can be tolerated in the final polyester resin. Preferably, the dicarboxylic acid anhydride used in step (c) of the present process is a cyclic anhydride.

The reaction of step (c) preferably is effected in the presence of a suitable catalyst. Suitable catalysts comprise compounds comprising a metal selected from the group consisting of zinc, tin, manganese, magnesium and/or calcium, such as the equivalent oxides, chlorides, acetates, butyrates, phosphates, nitrates, stearates, octanoates, oleates and naphthenates, or amines, as described in US-A-4306056, and alkyl quaternary amine compounds US-A-4560788. Compounds of zinc, such as zinc chloride, zinc acetate or zinc oxide are particularly desirable inasmuch as exceptionally light colored products are obtained by their use. Other suitable catalysts include ion exchange resins such as Amberlite IR-45 (OH)(amine type resin) Amberlite IRC-50 (carboxylic acid type resin), and salts of lead, cobalt, rare earth, cadmium and nickel. The catalyst may be employed in various amounts, for example, in a range of 0.001 to 1% by weight, based upon the dicarboxylic acid anhydride and the initiator compound.

The reaction is generally carried out at a temperature in the range of from 100°C to 240 °C, and at a pressure in the range of from 1 to 15 bar. This preferred embodiment of the present process permits to produce unsaturated polyester resins having the desired properties for various applications. Different functionality of the initiator molecules, as well as temperatures and weight ratio of the raw materials allow producing polyester resins with different molecular weights, and molecular weight distribution and functionality. Such resins may be for instance formulated on the basis of a crude propylene oxide fraction, phthalic acid anhydride and maleic acid anhydride.

Alternatively, the reaction in step (c) may be effected in several different steps, involving a condensation reaction.

This preferably involves a first stage addition reaction, wherein a pre-polymer is formed from propylene oxide and instance a dicarboxylic acid. After completion of this first stage, polyhydric alcohol and diacid or diacid anhydride are added, and the reaction mixture is allowed to react further at a temperature in the range of from 100°C to 240 °C, eventually yielding the desired unsaturated polyester product. This allows to introduce different functionalities, and to design a specific resin structure of different blocks.

However, all of the raw materials may be present in the reactor, and the reaction of step (c) may also be conducted as a single stage reaction.

Preferably, at least part of the dicarboxylic acids and/or anhydrides of dicarboxylic acids or polyhydric alcohols used in step (c) comprise an unsaturation capable of copolymerization with the styrene monomer. "Unsaturation" within the context of this specification describes an unsaturated double bond capable of radically copolymerization with the vinyl group of the styrene monomer, which is employed as both solvent as well as comonomer for the polyester resin. The degree of possible copolymerization is not critical, provided that at least a small degree of copolymerization with styrene monomer occurs between the unsaturation and the vinyl group of styrene monomer. Suitable unsaturated compounds include acetylenically and ethylenically unsaturated compounds, such as vinyl esters, vinyl alcohols, α,β- unsaturated dicarboxylic acids and α,β-unsaturated dicarboxylic acid anhydrides. Preferred examples of the α,β-unsaturated dicarboxylic acids include fumaric acid, maleic acid, itaconic acid, citraconic acid, mesaconic acid, chloromaleic acid, and the anhydrides thereof, all of which may be used alone or in combination. Again more preferably, in step (c) of the subject process, the compounds comprise maleic acid and/or maleic acid anhydride.

The double bond of maleic acid or its anhydride has a cis-configuration, leading to polyester chains with a high degree of steric hindrance. This usually decreases the rate of the final crosslinking reaction with styrene monomer. However, if during the polyester condensation reaction the temperature is maintained at a higher temperature, and for a sufficiently long period of time, the cis-configured double bond is transformed to the trans-isomer, i.e. it assumes a fumaric acid structure. As polyester resins containing fumaric acid units in the polyester resin chain have a 20 times higher reactivity towards styrene than those containing solely maleic acid units, the present process is preferably conducted in such way, that step (c) is performed in such way, that at least part of maleic acid units present are converted to the equivalent fumaric acid configuration, more preferably that essentially all of the maleic acid units are converted to the fumaric acid configuration. This may be conveniently achieved by exposing the polyester resin to a temperature in the range of from 180 to 200°C for a sufficiently long period of time. Determination of the required time and temperature is well within the skills of a person skilled in the art. The degree of conversion may be determined for instance by NMR. Other than the α,β-unsaturated acids, also saturated carboxylic acids and derivatives may be used as raw materials. These includes for instance phthalic acid, phthalic anhydride, isophthalic acid, terephthalic acid, hexahydrophthalic anhydride, tetrahydro phthalic anhydride, adipic acid, sebacic acid, and/or azelaic acid, all of which may be used alone or in combination. Further raw materials include polyhydric alcohols, such as for example diols such as ethylene glycol, diethylene glycol, propylene glycol, dipropylene glycol, trimethylene glycol, 1,3-butane diol, 1,4-butane diol, 2-methyl-1,3-propane diol, 1,6-hexane diol, cyclohexane diol, neopentyl glycol, 2,2,4- trimethyl-1,3-pentane diol, 1,4-cyclohexane dimethanol; hydrogenated bisphenol A, alkylene oxide adducts of hydrogenated bisphenol A, alkylene oxide adducts of bisphenol A; triols such as glycerol, trimethylol propane; or tetraols such as pentaerythritol, all of which may be used alone or in combination.

In step (c) of the present process, the crude alkylene oxide fraction is reacted with one or more compounds selected from the group consisting of dicarboxylic acids, dicarboxylic acid anhydrides and polyhydric alcohols. Preferably, said one or more compounds are selected from the group consisting of dicarboxylic acid anhydrides and polyhydric alcohols. More preferably, said one or more compounds are dicarboxylic acid anhydrides.

Styrene monomer is a further raw material for unsaturated polyester formulations. It is also cumbersome and cost intensive to handle, store and transport on industrial scale, i.e. several thousand of tons per annum. It further requires addition of stabilizers to prevent auto-polymerization, and even then is prone to form polystyrene.

The present process preferably comprises a further step (e), wherein the styrene monomer obtained in optional step (d) is added to an unsaturated polyester resin obtained in step (c). The styrene monomer obtained in step (d) is usually stabilized against uncontrolled polymerization by the addition of small amounts of a radical inhibitor, usually a phenolic compounds such as for instance hydroquinone, trimethyl hydroquinone, p-tertiary butyl catechol, p-tertiary butyl hydroquinone, toluyl hydroquinone, p-benzoquinone, naphthoquinone, hydroquinone monomethyl ether, phenothiazine, copper naphthenate, copper chloride and the like. In particular the quinone type radical inhibitors need the presence of dissolved oxygen in about stoichiometric quantities in order to remain active, an are employed in the range of from 10 to 50 parts per million. An unsaturated polyester resin blended with stabilized styrene monomer requires an increased amount of the radical initiator in application in order to neutralize the effect of the stabilization, resulting in increased costs and higher concentration of highly dangerous compounds. The presence of stabilizers in the styrene monomer thus reduces the reactivity. Therefore, the styrene monomer obtained in step (d) is preferably directly transferred to the reactor of step (c) or a mixing vessel, and more preferably not stabilized, or only stabilized to the level required for intermediate storage and transfer to the polyester reactor. Styrene monomer may be added to the unsaturated polyester resin in an amount so that a weight ratio of polyester to styrene monomer in the range of from 99:1 to 10:90 (weight/weight) is obtained. A preferred weight ratio of polyester to styrene monomer is in the range of from 97:3 to 20:80 (weight/weight), more preferably 95:5 to 30:70 (weight/weight).

A further raw material of considerable importance for unsaturated polyester resins is dicyclopentadiene (DCPD). This compound is usually added during the process step (c), if an unsaturated polyester resin is prepared, more preferably an unsaturated polyester resin comprising maleic anhydride. Above a temperature of 140°C, the DCPD dissociates into two cyclopentadiene molecules. These then undergo a Diels-Alder reaction with the cis-configured maleic anhydride, thereby introducing a rigid bicyclic structure into the polyester resin structure. This increases rigidity and hence the glass transition temperature of the polyester, while also increasing the hydrophobicity of the material. As a result, drying times in hand lay up applications are reduced, as well as the required amounts of styrene. Further, due to the high hydrophobicity of such resins, these unsaturated polyester resins are widely used in marine and sanitary applications. Accordingly, step (c) is preferably performed at a temperature of at least 140°C, and in presence of dicyclopentadiene.

A disadvantage of the use of dicyclopentadiene is the strong typical smell of this product. Even in minimal amounts, DCPD will impart its typical smell to all tubing, piping and tanks that it is brought into contact with. It is generally considered difficult and cost intensive to clean the equipment sufficiently to remove this smell, and hence dedicated transport and handling material is usually required. Accordingly, the present process is preferably performed in such way, that it is performed at a location where DCPD is manufactured, The DCPD can then directly be used in the subject process without intermediate handling and storage and/or transport, rendering the amount of dedicated equipment minimal.

Unsaturated polyester resins according to the subject invention are formulated in such way that they can copolymerize with styrene monomer in their final application. This copolymerization is usually effected by the addition of radical starter, i.e. a compound that will create radicals upon exposure to heat, ultraviolet light, electron beams or similar sources of initiation energy. The amount of the radical starter is preferably within a range of 0.1-10 parts by weight, and particularly within a range of 1-5 parts by weight based on 100 parts by weight of the unsaturated polyester resin composition. Heat-activated radical starters include organic peroxides, such as for instance diacyl peroxides, peroxy esters, hydroperoxides, ketone peroxide, alkyl peresters and percarbonate compounds, and alkali metal salts of peracids. Ultraviolet light-activated radical starters are photosensitive compounds, for instance acylphosphine oxide, benzoyl ether, benzophenone, acetophenone and thioxantone compounds. Electron radiation-activated radical starters include halogenated alkylbenzene, disulfide compounds and similar compounds.

Further additives that can accelerate or decelerate the radical reaction, and which may be used in combination with the above described curing agent include metal salts such as cobalt naphthenate and cobalt octanoate, tertiary aromatic amines such as N,N-dimethylaniline, N,N-di(hydroxyethyl) p-toluidine and dimethyl acetoacetamide.

Depending on the desired application, to the unsaturated polyester formulation optionally other resins and additives may be added, such as thermoplastic resins, epoxy resins and polyurethanes.

## Claims

1. An integrated process for the preparation of a polyester resin, comprising the steps of
(a) reacting a suitable oxidant with propene in the presence of an epoxidation catalyst to form propylene oxide,
(b) separating a propylene oxide fraction, and
(c) reacting the obtained propylene oxide fraction with one or more compounds selected from the group consisting of dicarboxylic acids, dicarboxylic acid anhydrides and polyhydric alcohols to obtain a polyester resin.

2. A process according to claim 1, wherein the oxidant is ethylbenzene hydroperoxide.

3. A process according to claim 2, comprising a further step (d), wherein 1-phenyl ethanol obtained in step (a) is dehydrated at least partly into styrene in the presence of a suitable dehydration catalyst.

4. A process according to any one of claims 1 to 3, wherein at least part of the dicarboxylic acids, dicarboxylic acid anhydrides or polyhydric alcohols comprises an unsaturation capable of radical copolymerization with styrene monomer.

5. A process according to any one of claims 1 to 4, wherein step (c) is conducted by reacting the propylene oxide with one or more dicarboxylic acid anhydrides under initiation by a compound having one or more active hydrogen atoms.

6. A process according to claim 4 or claim 5, wherein the process comprises a further step (e) of adding the styrene monomer obtained in step (d) to the polyester resin.

7. A process according to any one of claims 1 to 6, wherein the propylene oxide fraction employed in step (c) comprises on total composition from 95% by weight to 99.95% by weight of propylene oxide.

8. A process according to any one of claims 1 to 7, wherein the propylene oxide fraction comprises from 50 to 5000 ppmw of water, based on total composition.

9. A process according to any one of claims 1 to 8, wherein the propylene oxide fraction separated, in step (b), from the mixture obtained in step (a) is directly transferred to step (c).

10. A process according to any one of claims 1 to 9, wherein the dicarboxylic acid anhydride comprises maleic acid anhydride.

11. A process according to claim 10, wherein step (c) is performed such that at least part of the configuration of the double bonds derived from maleic acid in the polyester resins are transformed to the configuration of fumaric acid.

12. A process according to any one of claims 1 to 11, wherein step (c) is performed at a temperature of at least 140°C and in the presence of dicyclopentadiene.

## Patentansprüche

1. Integriertes Verfahren zur Herstellung eines Polyesterharzes, umfassend die Schritte von
(a) Umsetzen eines geeigneten Oxidationsmittels mit Propen in Gegenwart eines Epoxidierungskatalysators, um Propylenoxid auszubilden,
(b) Abtrennen einer Propylenoxidfraktion, und
(c) Umsetzen der erhaltenen Propylenoxidfraktion mit einer oder mehreren Verbindungen, ausgewählt von der Gruppe, bestehend aus Dicarbonsäuren, Dicarbonsäureanhydriden und mehrwertigen Alkoholen, um ein Polyesterharz zu erhalten.

2. Verfahren nach Anspruch 1, worin das Oxidationsmittel Ethylbenzolhydroperoxid ist.

3. Verfahren nach Anspruch 2, umfassend einen weiteren Schritt (d), worin der im Schritt (a) erhaltene 1-Phenylethanol in Gegenwart eines geeigneten Dehydratisierungskatalysators wenigstens teilweise zu Styrol dehydratisiert wird.

4. Verfahren nach einem der Ansprüche 1 bis 3, worin wenigstens ein Teil der Dicarbonsäuren, der Dicarbonsäureanhydride oder der mehrwertigen Alkohole eine Unsättigung umfasst, die zur radikalischen Copolymerisation mit Styrolmonomer fähig ist.

5. Verfahren nach einem der Ansprüche 1 bis 4, worin der Schritt (c) durch Umsetzen des Propylenoxids mit einem oder mehreren Dicarbonsäureanhydriden mittels Initiieren durch eine Verbindung mit einem oder mehreren aktiven Wasserstoffatomen erfolgt.

6. Verfahren nach Anspruch 4 oder Anspruch 5, wobei das Verfahren einen weiteren Schritt (e) des Zusetzens von Styrolmonomer, welches im Schritt (d) erhalten wird, zum Polyesterharz umfasst.

7. Verfahren nach einem der Ansprüche 1 bis 6, worin die im Schritt (c) angewandte Propylenoxidfraktion eine Gesamtzusammensetzung von 95 Gew.-% bis 99,95 Gew.-% an Propylenoxid umfasst.

8. Verfahren nach einem der Ansprüche 1 bis 7, worin die Propylenoxidfraktion 50 bis 5000 ppmw Wasser, bezogen auf die Gesamtzusammensetzung, umfasst.

9. Verfahren nach einem der Ansprüche 1 bis 8, worin die im Schritt (b) aus dem im Schritt (a) erhaltenen Gemisch abgetrennte Propylenoxidfraktion direkt in den Schritt (c) übergeführt wird.

10. Verfahren nach einem der Ansprüche 1 bis 9, worin das Dicarbonsäureanhydrid Maleinsäureanhydrid umfasst.

11. Verfahren nach Anspruch 10, worin der Schritt (c) derart durchgeführt wird, dass wenigstens ein Teil der Konfiguration der aus Maleinsäure herrührenden Doppelbindungen in den Polyesterharzen in die Konfiguration der Fumarsäure umgewandelt werden.

12. Verfahren nach einem der Ansprüche 1 bis 11, worin der Schritt (c) bei einer Temperatur von wenigstens 140°C und in Gegenwart von Dicyclopentadien durchgeführt wird.

## Revendications

1. Procédé intégré pour la préparation d'une résine de polyester, comprenant les étapes de :
(a) réaction d'un oxydant approprié avec du propène en présence d'un catalyseur d'époxydation pour former de l'oxyde de propylène,
(b) séparation d'une fraction d'oxyde de propylène, et
(c) réaction de la fraction d'oxyde de propylène obtenue avec un ou plusieurs composés choisis dans le groupe comprenant les acides dicarboxyliques, les anhydriques d'acide dicarboxylique et les alcools polyvalents pour obtenir une résine de polyester.

2. Procédé suivant la revendication 1, dans lequel l'oxydant est de l'hydroperoxyde d'éthylbenzène.

3. Procédé suivant la revendication 2, comprenant une étape (d) supplémentaire, dans laquelle le 1-phényl éthanol obtenu dans l'étape (a) est déshydraté au moins partiellement en styrène en présence d'un catalyseur de déshydratation approprié.

4. Procédé suivant l'une quelconque des revendications 1 à 3, dans lequel au moins une partie des acides dicarboxyliques, des anhydrides d'acide dicarboxylique ou des alcools polyvalents comprend une insaturation pouvant copolymériser radicalairement avec du monomère de styrène.

5. Procédé suivant l'une quelconque des revendications 1 à 4, dans lequel l'étape (c) est réalisée par la réaction de l'oxyde de propylène avec un ou plusieurs anhydrides d'acide dicarboxylique sous l'initiation d'un composé comportant un ou plusieurs atomes d'hydrogène actif.

6. Procédé suivant la revendication 4 ou la revendication 5, dans lequel le procédé comprend une étape (e) supplémentaire consistant à ajouter le monomère de styrène obtenu dans l'étape (d) à la résine de polyester.

7. Procédé suivant l'une quelconque des revendications 1 à 6, dans lequel la fraction d'oxyde de propylène utilisée dans l'étape (c) comprend par rapport à la composition totale de 95 % en poids à 99,5 % en poids d'oxyde de propylène.

8. Procédé suivant l'une quelconque des revendications 1 à 7, dans lequel la fraction d'oxyde de propylène comprend de 50 à 5000 ppmp d'eau, par rapport à la composition totale.

9. Procédé suivant l'une quelconque des revendications 1 à 8, dans lequel la fraction d'oxyde de propylène séparée, dans l'étape (b), du mélange obtenu dans l'étape (a), est directement transférée à l'étape (c).

10. Procédé suivant l'une quelconque des revendications 1 à 9, dans lequel l'anhydride d'acide dicarboxylique comprend de l'anhydride d'acide maléique.

11. Procédé suivant la revendication 10, dans lequel l'étape (c) est réalisée de telle sorte qu'au moins une partie de la configuration des doubles liaisons provenant de l'acide maléique dans les résines de polyester est transformée en la configuration d'acide fumarique.

12. Procédé suivant l'une quelconque des revendications 1 à 11, dans lequel l'étape (c) est réalisée à une température d'au moins 140 °C et en présence de dicyclopentadiène.
